# DEMANDE DE BREVET EUROPEEN

(11) **EP 1 752 346 A1**
(43) Date de publication de la demande: **14.02.2007**
(21) Numéro de dépôt: 06016092.6
(22) Date de dépôt: 02.08.2006
(51) Int. Cl.: B60S 1/34

(54) **Dispositif pour l'entraînement d'un bras d'entraînement et pour l'orientation de la lame d'essuyage**

(30) Priorité: 08.08.2005 FR 0508406
(71) Demandeur: VALEO SYSTEMES D'ESSUYAGE, 78321 Le Mesnil Saint Denis Cedex (FR)
(72) Inventeur: Trebouet, Marcel, 78860 St Nom La Breteche (FR)

(57) **Abrégé**

L'invention propose un dispositif d'entraînement (10) d'un bras d'essuie-glace (12) qui comporte :
- un corps principal (16) arrière, une tête avant (18) qui est montée pivotante par rapport à une extrémité longitudinale avant (16b) du corps principal (16) autour d'un axe B longitudinal, et
- une tige (20) intermédiaire d'articulation de la tête avant (18) sur l'extrémité longitudinale avant (16b) du corps principal (16),

caractérisé en ce qu'il comporte une chape intermédiaire (22) de montage dans laquelle la tige longitudinale (20) est montée et qui est apte à être fixée au corps principal (16) après le montage de la tige longitudinale (20) dans la chape (22).

## Description

L'invention propose un dispositif d'entraînement d'un bras d'essuyage d'un panneau vitré, qui comporte des moyens permettant au bras d'entraînement de pivoter autour de son axe principal longitudinal.

L'invention propose plus particulièrement un dispositif d'entraînement d'un bras d'essuie-glace en mouvement de balayage alterné autour d'un axe A globalement vertical, qui comporte :
- un corps principal arrière qui est monté sur l'extrémité supérieure d'un arbre d'entraînement coaxial à l'axe A vertical ;
- une tête avant qui est montée pivotante par rapport à une extrémité longitudinale avant du corps principal autour d'un axe B longitudinal, dont l'extrémité longitudinale avant porte des moyens d'articulation du bras d'essuie-glace autour d'un axe C globalement transversal ; et
- une tige intermédiaire d'articulation de la tête avant sur l'extrémité longitudinale avant du corps principal, dont un tronçon arrière de la tige est monté pivotant dans l'extrémité avant du corps principal autour de l'axe B longitudinal.

Un tel dispositif d'entraînement permet d'adapter l'orientation du balai d'essuie-glace porté par le bras de telle manière que le balai soit positionné dans un plan sensiblement perpendiculaire au panneau vitré et ceci sur toute la course de balayage de l'essuie-glace.

En effet, dans une conception classique, le balai et le bras d'une part, et le bras et l'entraîneur d'autre part, sont articulés respectivement autour d'axes qui sont sensiblement perpendiculaires à la direction générale longitudinale de l'essuie-glace, et qui sont sensiblement parallèles au plan général du panneau vitré pour permettre au balai de s'adapter aux variations "d'altitude" de la panneau vitré par rapport à une "verticale" définie par l'axe du mouvement de balayage alterné de l'essuie-glace.

Toutefois, il est apparu des problèmes de qualité d'essuyage lorsque la courbure du panneau vitré est particulièrement forte, c'est notamment le cas pour les pare-brise avant d'automobiles.

Ce problème est particulièrement important à proximité des montants latéraux du pare-brise lorsque celui-ci est fortement courbé et lorsque l'essuie-glace est destiné à venir essuyer cette zone en étant sensiblement parallèle au montant. Cela est notamment le cas au niveau du montant du pare-brise agencé du côté du conducteur du véhicule.

L'angle de la raclette d'essuyage par rapport au panneau vitré, mesuré dans un plan transversal perpendiculaire à la direction longitudinale du balai, varie alors de manière importante, ce qui nuit à l'efficacité de l'essuyage.

Le document US-A-4.800.610 décrit un dispositif d'entraînement qui comporte des moyens pour faire pivoter le bras d'essuie-glace et le balai autour d'un axe sensiblement parallèle à leur direction longitudinale en fonction de la position angulaire de l'essuie-glace dans son mouvement de balayage. Un tel dispositif d'entraînement permet donc de conserver un angle d'incidence de la raclette d'essuyage sensiblement constant.

Selon ce document, la tête avant est montée articulée par rapport au corps principal autour de l'axe longitudinal par l'intermédiaire d'une tige intermédiaire longitudinale.

Un tronçon arrière de la tige intermédiaire est reçu dans un logement complémentaire du corps principal et ce tronçon arrière coopère avec des moyens d'entraînement de la tête avant en pivotement autour de l'axe longitudinal.

Les dimensions du corps principal, de la tête avant et de la tige intermédiaire sont relativement réduites, ce qui rend le montage du tronçon arrière de la tige dans le corps principal particulièrement complexe.

L'invention a pour but de proposer un dispositif d'entraînement qui comporte une tête avant montée articulée par rapport au corps principal, et qui comporte des moyens relativement simples pour le montage de la tête avant sur le corps principal.

Dans ce but, l'invention propose un dispositif d'entraînement du type décrit précédemment, caractérisé en ce qu'il comporte une chape intermédiaire de montage dans laquelle le tronçon arrière de la tige longitudinale est monté pivotant autour de l'axe B longitudinal et en ce que la chape intermédiaire est apte à être fixée au corps principal après le montage du tronçon arrière de la tige longitudinale dans la chape.

Selon d'autres caractéristiques de l'invention :
- la chape intermédiaire est reçue dans un logement creux qui est réalisé dans le corps principal et qui débouche au moins dans ouverture inférieure réalisée dans une face horizontale inférieure du corps principal ;
- la chape comporte une plaque horizontale inférieure de fermeture de l'ouverture inférieure, de manière que la face horizontale inférieure de la plaque inférieure affleure verticalement avec la face horizontale inférieure du corps principal ;
- la plaque inférieure porte des moyens de fixation de la chape dans le logement creux ;
- la chape comporte une douille annulaire de guidage en pivotement de la tige longitudinale qui est agencée à l'intérieur du logement creux et la tige comporte des moyens pour son blocage en mouvement longitudinal dans la chape ;
- la chape intermédiaire comporte des moyens pour limiter l'amplitude de pivotement de la tête avant par rapport au corps principal autour de l'axe B longitudinal ;
- la chape comporte deux doigts longitudinaux qui s'étendent longitudinalement vers l'avant depuis une extrémité longitudinale avant de la chape, et contre chacun desquels la tête avant est apte à venir en butée lors de son pivotement par rapport au corps principal.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un dispositif d'entraînement selon l'invention, dans lequel la tête avant est en position pivotée par rapport au corps principal ;
- la figure 2 est un éclaté du dispositif d'entraînement représenté à la figure 1 ;
- la figure 3 est une perspective de dessous du dispositif d'entraînement selon l'invention montrant le montage de la chape intermédiaire dans le corps principal ;
- la figure 4 est une vue en bout de l'entraîneur selon l'invention, montrant les doigts longitudinaux avant.

Pour la description de l'invention, on adoptera à titre non limitatif les orientations verticale, longitudinale et transversale selon le repère V, L, T indiqué aux figures.

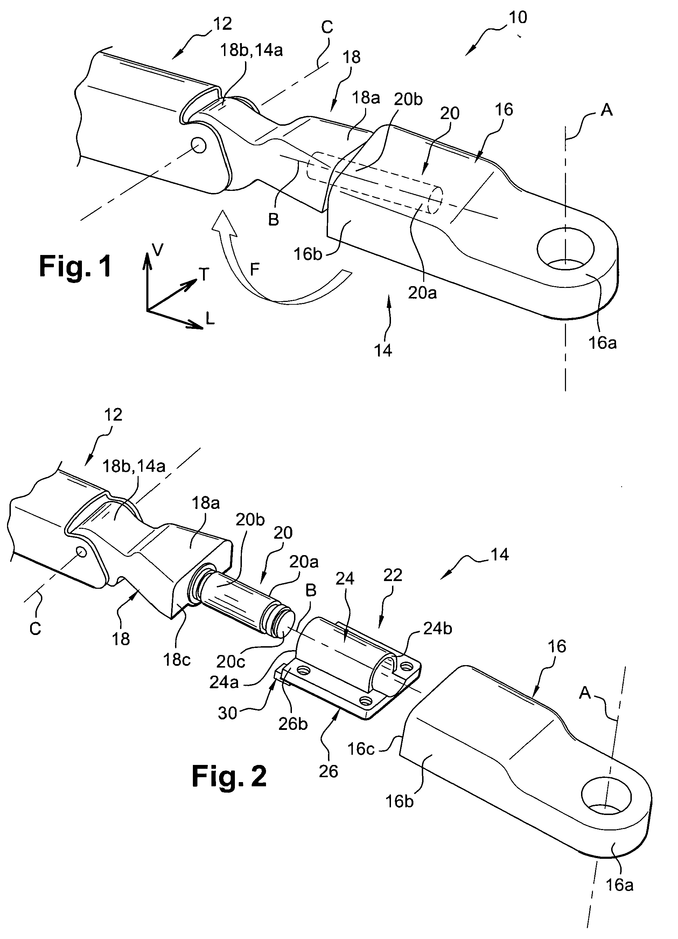

On adoptera aussi l'orientation d'avant en arrière comme étant la direction longitudinale et de gauche à droite en se reportant à la figure 1.

Dans la description qui va suivre, des éléments identiques, similaires ou analogues seront désignés par les mêmes chiffres de référence.

On a représenté à la figure 1 un dispositif 10 d'entraînement d'un bras d'essuie-glace 12 dans un mouvement de balayage alterné autour d'un axe A globalement vertical.

Le dispositif d'entraînement 10 comporte un arbre vertical d'entraînement (non représenté) coaxial à l'axe A vertical sur l'extrémité supérieure duquel est monté un entraîneur 14 d'orientation principale longitudinale, et le bras d'essuie-glace 12 est monté sur l'extrémité longitudinale avant libre 14a de l'entraîneur 14.

L'entraîneur 14 comporte un corps principal arrière 16 par l'intermédiaire duquel l'entraîneur 14 est monté sur l'extrémité supérieure de l'arbre d'entraînement, et une tête avant 18 qui porte à son extrémité avant libre 18a le bras d'essuie-glace 12.

Ici, le corps principal 16 est globalement rectiligne d'orientation principale longitudinale et son extrémité longitudinale arrière 16a est montée sur l'extrémité supérieure de l'arbre d'entraînement.

L'extrémité arrière 18a de la tête avant 18 est montée pivotante par rapport à l'extrémité avant 16b du corps principal 16 autour d'un axe B longitudinal, comme on l'a représenté par la flèche F à la figure 1, pour permettre un ajustement de l'orientation de la lame d'essuyage (non représentée) par rapport au panneau vitré à essuyer (non représenté).

Enfin; le bras d'entraînement est monté articulé par rapport à l'extrémité longitudinale avant 18b de la tête avant 18 autour d'un axe transversal C.

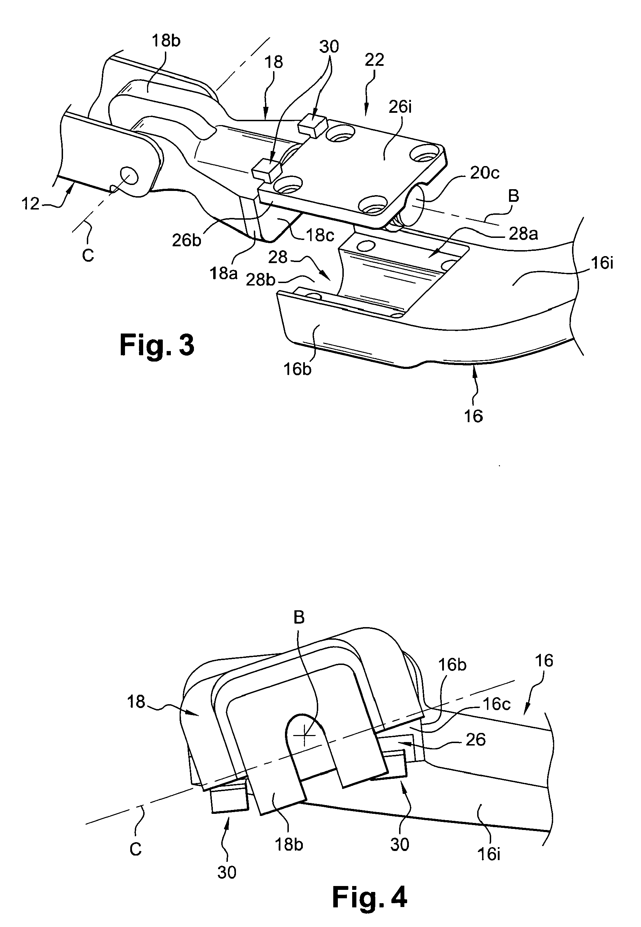

Comme on peut le voir aux figures 2 et 3, l'articulation de la tête avant 18 par rapport au corps principal 16 est réalisée par l'intermédiaire d'une tige intermédiaire 20 coaxiale à l'axe longitudinal B de pivotement de la tête avant 18 par rapport au corps principal 16.

Pour cela, un tronçon arrière 20a de la tige intermédiaire 20 est monté pivotant dans l'extrémité avant 16b du corps principal 16 autour de l'axe longitudinal B, et un tronçon avant 20b de la tige 20 est fixé à l'extrémité arrière 18a de la tête avant 18.

Conformément à l'invention, l'entraîneur 14 comporte une chape 22 de montage du tronçon arrière 20a de la tige 20 en pivotement par rapport à l'extrémité avant 16b du corps principal 16.

La chape 22 est réalisée de manière que le montage de la tige intermédiaire 20 en pivotement dans l'extrémité avant 16b du corps 16 s'effectue par un premier montage du tronçon arrière 20a de la tige 20 en pivotement dans la chape 22, puis par la fixation de la chape 22 au corps 16.

Comme on peut le voir à la figure 2, la chape 22 comporte une douille annulaire supérieure 24 dans laquelle le tronçon arrière 20a de la tige intermédiaire 20 est guidé en pivotement autour de l'axe B longitudinal, et une plaque inférieure horizontale 26 qui porte des moyens de fixation de la chape 22 à l'extrémité avant 16a du corps principal 16.

Conformément à un autre aspect de l'invention, l'extrémité avant 16b du corps principal 16 comporte un logement creux 28 dans lequel la chape 22 est reçue. Ce logement creux 28 est conformé de manière que la chape 22 soit masquée par le corps principal 16.

Ainsi, la chape 22 est peu visible par l'utilisateur, ce qui permet de conserver un aspect extérieur agréable de l'entraîneur 14.

Selon l'invention, et comme on peut le voir à la figure 3, le logement creux 28 débouche dans une ouverture inférieure 28a réalisée dans la face inférieure horizontale 16i du corps principal 16, au travers de laquelle la chape 22 est montée dans le logement creux 28.

Cette ouverture inférieure 28a du logement creux 28 est de préférence de forme complémentaire à la plaque inférieure 26 de la chape 22. Ainsi, lorsque la chape est en position montée dans le logement creux 28, la face horizontale inférieure 26i de la plaque inférieure 26 affleure verticalement avec la face inférieure 16i du corps principal 16, ce qui permet d'avoir un aspect agréable du corps principal.

Le logement creux 28 est aussi débouchant dans une ouverture avant 28b réalisée dans la face transversale avant 16c du corps principal 16, et qui est traversé par le tronçon arrière 20a de la tige intermédiaire 20 lorsque la chape 22 est montée dans le logement creux 28.

La chape 22 est en outre réalisée de manière à limiter les déplacements axiaux de la tige 20 dans la douille 24, pour limiter les éventuels bruits générés lors du fonctionnement du mécanisme d'essuyage et par conséquent pour bloquer longitudinalement la tige 20 en position par rapport à la chape 22.

Le blocage de la tige 20 en position par rapport à la chape est réalisé par l'intermédiaire de la face transversale arrière 18c de la tête avant 18, qui est apte à venir en butée longitudinalement vers l'arrière contre la face avant 24a de la douille 24.

Le blocage de la tige 20 en position par rapport à la chape 22 est aussi réalisé par l'intermédiaire de moyens de blocage (non représentés) qui sont portés par l'extrémité arrière libre 20c du tronçon arrière 20a de la tige 20.

Ces moyens de blocage consistent par exemple en un anneau de serrage qui est monté dans une gorge de l'extrémité arrière libre 20c du tronçon arrière 20a de la tige 20 et qui est apte à s'appuyer vers l'avant contre une face transversale arrière de la douille 24.

Enfin, la chape 22 comporte des moyens pour limiter l'amplitude de pivotement de la tête avant 18 par rapport au corps principal 16, qui consistent en deux doigts longitudinaux 30 dont chacun s'étend longitudinalement vers l'avant depuis le bord d'extrémité avant 26b de la plaque inférieure 26.

Les doigts longitudinaux 30 sont conformés de manière que la tête avant 18 est apte à venir en butée vers le bas contre l'un ou l'autre des doigts 30, lorsqu'elle est dans une position angulaire extrême associée par rapport à l'axe B longitudinal.

Par ailleurs, les doigts 30 sont agencés au niveau de la partie inférieure de l'entraîneur, ils sont ainsi peu visibles, ce qui permet de conserver un aspect agréable de l'entraîneur 14.

Le montage de la tige intermédiaire 20 dans la douille 24 et le montage de la chape 22 dans le logement creux 28 du corps principal 16 sont deux opérations relativement rapides et qui présentent des risque relativement réduits d'erreurs de montage.

De plus, il est particulièrement aisé de corriger les jeux de montage de la tige 20 dans la douille 24 avant le montage de la chape 22 dans le corps principal 16, contrairement à l'art antérieur pour lequel une telle correction aurait été particulièrement complexe à mettre en oeuvre.

Par ailleurs, l'entraîneur 14 qui vient d'être décrit comporte un corps principal 16 et une tête avant 18 globalement rectilignes. Cependant, il sera compris que l'invention n'est pas limitée à ce mode de réalisation, et que le corps 16 et/ou la tête 18 peuvent avoir une forme différente, par exemple, le corps 16 peut être courbé.

## Revendications

1. Dispositif d'entraînement (10) d'un bras d'essuie-glace (12) en mouvement de balayage alterné autour d'un axe A globalement vertical, qui comporte :
- un corps principal (16) arrière qui est monté sur l'extrémité supérieure d'un arbre d'entraînement coaxial à l'axe A vertical ;
- une tête avant (18) qui est montée pivotante par rapport à une extrémité longitudinale avant (16b) du corps principal (16) autour d'un axe B longitudinal, dont l'extrémité longitudinale avant (18b) porte des moyens d'articulation du bras d'essuie-glace (12) autour d'un axe C globalement transversal ; et
- une tige (20) intermédiaire d'articulation de la tête avant (18) sur l'extrémité longitudinale avant (16b) du corps principal (16), dont un tronçon arrière (20a) de la tige (20) est monté pivotant dans l'extrémité avant (16b) du corps principal (16) autour de l'axe B longitudinal,
**caractérisé en ce qu'**il comporte une chape intermédiaire (22) de montage dans laquelle le tronçon arrière (20a) de la tige longitudinale (20) est monté pivotant autour de l'axe B longitudinal et **en ce que** la chape intermédiaire (22) est apte à être fixée au corps principal (16) après le montage du tronçon arrière (20a) de la tige longitudinale (20) dans la chape (22).

2. Dispositif d'entraînement (10) selon la revendication précédente, **caractérisé en ce que** la chape intermédiaire (22) est reçue dans un logement creux (28) qui est réalisé dans le corps principal (16) et qui débouche au moins dans ouverture inférieure (28a) réalisée dans une face horizontale inférieure (16i) du corps principal (16).

3. Dispositif d'entraînement (10) selon la revendication précédente, **caractérisé en ce que** la chape (22) comporte une plaque horizontale inférieure (26) de fermeture de l'ouverture inférieure, de manière que la face horizontale inférieure (26i) de la plaque inférieure (26) affleure verticalement avec la face horizontale inférieure (26i) du corps principal (16).

4. Dispositif d'entraînement (10) selon la revendication précédente, **caractérisé en ce que** la plaque inférieure (26) porte des moyens de fixation de la chape (22) dans le logement creux (28).

5. Dispositif d'entraînement (10) selon l'une quelconque des revendications 2 à 4, en combinaison avec la revendication 2, **caractérisé en ce que** la chape (22) comporte une douille annulaire (24) de guidage en pivotement de la tige longitudinale (20) qui est agencée à l'intérieur du logement creux (28) et **en ce que** la tige (20) comporte des moyens pour son blocage en mouvement longitudinal dans la chape (22).

6. Dispositif d'entraînement (10) selon l'une quelconque des revendications précédentes, **caractérisé en ce que** la chape intermédiaire (22) comporte des moyens (30) pour limiter l'amplitude de pivotement de la tête avant (18) par rapport au corps principal (16) autour de l'axe B longitudinal.

7. Dispositif d'entraînement (10) selon la revendication précédente, **caractérisé en ce que** la chape (22) comporte deux doigts longitudinaux (30) qui s'étendent longitudinalement vers l'avant depuis une extrémité longitudinale avant (24b) de la chape (22), et contre chacun desquels la tête avant (18) est apte à venir en butée lors de son pivotement par rapport au corps principal (16).
